# FASCICULE DE BREVET EUROPEEN

(11) **EP 2 082 957 B1**
(45) Date de publication et mention de la délivrance du brevet: **04.08.2010**
(21) Numéro de dépôt: 08022110.4
(22) Date de dépôt: 19.12.2008
(51) Int. Cl.: B64C 27/00, G01M 1/36

(54) **Dispositif et procédé d'équilibrage dynamique d'une pale**
Verfahren und Vorrichtung zum dynamischen Ausgleich eines Schaufelblatts
Device and method for dynamically balancing a blade

(30) Priorité: 23.01.2008 FR 0800352
(43) Date de publication de la demande: 29.07.2009
(73) Titulaire: EUROCOPTER, 13725 Marignane Cédex (FR)
(72) Inventeur: Métivier, Rémi, 75009 Paris (FR)
(74) Mandataire: GPI & Associés

(56) Documents cités:
- EP-A- 0 237 772
- EP-A- 1 580 543
- US-A- 4 150 920
- US-A- 6 139 271

## Description

La présente invention concerne un dispositif et un procédé d'équilibrage dynamique d'une pale. Cette invention se situe donc dans le domaine technique des pales, et plus particulièrement dans le domaine technique des pales de giravion.

En effet, le rotor de sustentation d'un giravion, et éventuellement de propulsion dans le cas d'un hélicoptère, comporte une pluralité de pales.

Or, on constate qu'à l'issue de leur fabrication, les pales présentent des écarts en terme de masses et en terme de caractéristiques aérodynamiques. Les constructeurs ont alors réduit à leur maximum les différentes tolérances de fabrication mais des écarts subsistent d'une pale à l'autre.

Il devient donc nécessaire de prévoir des ajustements, dénommés équilibrage par l'homme du métier, pour que toute les pales d'un rotor présentent les mêmes caractéristiques.

En premier lieu, chaque pale doit pouvoir générer la même portance pour un angle de pas donné.

Par suite, les pales sont pourvues de petits volets, dénommés « tab » par l'homme du métier, sur leur bord de fuite à proximité de leur extrémité libre. Toute modification du calage d'un tel volet avec le profil aérodynamique de la pale génère une force qui modifie la portance de la pale.

En ajustant le calage des volets dédiés à cette fonction, il est possible de réaliser un équilibrage aérodynamique de chaque pale.

Cet ajustement est en principe réalisé en braquant manuellement chaque volet d'un angle approprié, éventuellement différent pour chaque volet. Pour ce faire, chaque volet est constitué en général une lame métallique solidaire de la pale à équilibrer.

Cependant, en référence au document US6322324, des actionneurs peuvent commander l'inclinaison des volets de la pale. Toutefois, l'acheminement des moyens d'alimentation électrique ou de contrôle de l'actionneur au travers du rotor et de la pale peut s'avérer difficile.

En second lieu, les pales doivent avoir le même moment statique, défini par le produit entre la masse de la pale et la distance séparant le centre de gravité de la pale de l'axe de rotation du rotor.

Le constructeur réalise donc un équilibrage statique en montant des éléments pesants sur la pale. Ces éléments pesant modifient à la fois la masse de la pale et la position de son centre de gravité, et par conséquent son moment statique.

Enfin, en troisième lieu, il est nécessaire d'équilibrer dynamiquement les pales afin qu'elles induisent un moment de torsion identique.

Pour réaliser l'équilibrage dynamique, il convient d'uniformiser, d'une pale à l'autre, la distance séparant le centre de gravité du centre de poussée de la pale.

Un premier type de dispositif, explicité notamment par le document US 4239456, consiste à équilibrer dynamiquement la pale à l'aide de masselottes pendues au niveau du pied la pale.

Toutefois, compte tenu de la complexité de ce premier type de dispositif ainsi que de ces répercussions sur l'efficacité aérodynamique de la pale, on utilise plus communément un deuxième type de dispositif visant à déplacer selon la corde de la pale des éléments pesants insérés au bout de cette pale.

Le document EP0237772, qui constitue l'art antérieur le plus proche, présente un dispositif d'équilibrage comportant une cavité, obturée par une trappe d'accès, dans laquelle sont disposés des éléments pesants conformément à une répartition donnée en corde.

Le document DE4036708 prévoit l'insertion de blocs de plaquettes, solidarisées entre elles par un écrou, dans un orifice de la pale obturé par une trappe d'accès. L'équilibrage est réalisé en ajustant le nombre de plaquettes.

De même, le document FR2781196 prévoit l'insertion d'éléments pesants dans un logement, débouchant sur l'extérieur, afin d'assurer un équilibrage dynamique tout en conservant un réglage statique. Lorsque les éléments pesants ont été disposés dans leur logement, ce dernier est fermé à l'aide d'une trappe d'accès.

La pale décrite par le document FR2315433 comporte trois orifices dans lesquels sont agencés des empilements d'éléments pesants.

Chaque empilement est traversé par une tige filetée afin que les éléments pesants soient maintenus en position par un écrou autobloquant vissé sur la tige.

Le document DE1955061 prévoit un logement ménagé au bout d'une pale, deux ensembles pesants séparés par un ressort étant agencés dans ce logement. Le logement est ensuite obturé par un capot.

De plus, les ensembles pesants sont traversés par une tige filetée qui saille du logement en traversant le capot.

En faisant tourner la tige filetée, un opérateur déplace les ensembles selon la corde de la pale pour l'équilibrer.

Ainsi, selon les dispositifs du deuxième type, en modifiant l'emplacement des éléments pesants dans un orifice, ou leur masse, un opérateur équilibre la pale.

L'équilibrage est cependant contraignant dans la mesure où il implique souvent un nombre d'opérations important allant de l'ouverture/fermeture de la trappe d'accès du logement en passant par la manipulation des éléments pesants.

De plus, on constate que ces dispositifs du deuxième type débouchent tous sur l'extérieur d'une pale. La présence de trappes de fermeture, ou de capots, ne suffit alors pas pour éviter l'apparition de corrosions sur les diverses parties des dispositifs concernés.

Enfin, les dispositifs de ce deuxième type peuvent générer des problèmes de sécurité en cas d'ouverture intempestive de la trappe d'accès, des éléments pesants pouvant éventuellement être éjectés de la pale.

La présente invention a alors pour objet de proposer un dispositif d'équilibrage (revendication 1), et le procédé (revendication 12) d'équilibrage associé, permettant de s'affranchir des limitations mentionnées ci-dessus. En particulier, l'invention vise à obtenir un dispositif d'équilibrage totalement protégé de la corrosion, sécuritaire et facilement réglable.

Selon l'invention, une pale de giravion, munie d'un moyen d'équilibrage d'un dispositif d'équilibrage dynamique, est remarquable en ce que le moyen d'équilibrage est noyé à l'intérieur du corps de la pale de manière à ne pas déboucher sur l'extérieur de cette pale.

Ainsi, le moyen d'équilibrage ne risque pas de subir un phénomène corrosif puisqu'il n'est pas en contact avec l'atmosphère extérieure.

Pour que le moyen d'équilibrage ne soit pas corrodé, l'invention envisage une solution totalement nouvelle visant à noyer le moyen d'équilibrage dans la pale pour éviter tout contact avec l'extérieur. Malgré le fait que l'on a alors plus accès à ce moyen d'équilibrage, de manière surprenante il reste possible d'agir sur ce dernier pour le régler.

De même, on constate qu'aucune partie du moyen d'équilibrage n'est susceptible de se détacher, et donc d'endommager la pale voire même d'engendrer des balourds.

En outre, le moyen d'équilibrage comporte au moins un élément pesant disposé dans une cavité cylindrique de section circulaire ne débouchant pas sur l'extérieur de la pale, l'élément pesant pouvant être déplacé à distance et sans contact le long d'une corde de ladite pale selon laquelle est agencée la cavité cylindrique.

Selon un premier mode de réalisation, la cavité cylindrique résulte d'un orifice ménagé à l'intérieur de la pale lors de sa fabrication.

Selon un deuxième mode de réalisation, la cavité cylindrique est générée à l'aide d'un tube introduit dans la pale.

Quel que soit le mode de réalisation, l'élément pesant du moyen d'équilibrage est alors déplaçable dans cette cavité cylindrique le long d'une corde de la pale afin que l'homme du métier puisse équilibrer précisément cette pale.

Ce déplacement étant réalisable à distance, le moyen d'équilibrage peut effectivement être noyé dans la pale. Ainsi, il n'est plus nécessaire de prévoir une trappe d'accès protégeant l'élément pesant d'agressions extérieurs.

De préférence, le moyen d'équilibrage est pourvu d'une tige filetée qui traverse l'élément pesant en son centre, cet élément pesant pouvant tourner autour de la tige filetée de manière à se déplacer longitudinalement le long de ladite corde. Plus précisément, l'élément pesant comporte un taraudage, autour de son axe de rotation longitudinal, qui coopère avec le filetage de la tige filetée.

L'homme du métier active alors à distance et sans contact l'élément pesant pour qu'il tourne autour de la tige filetée, cette rotation entrainant un déplacement longitudinal de l'élément pesant le long de cette tige filetée.

Par ailleurs, le moyen d'équilibrage possédant un premier et un deuxième bouchons solidarisés respectivement aux première et deuxième extrémités de la tige filetée, chaque bouchon comportant dans sa portion centrale un matériau retournant à sa forme initiale après la cessation d'une contrainte ayant produit une déformation dudit matériau, la tige filetée est solidarisée au dit matériau constituant la portion centrale de chaque bouchon.

Selon le premier mode de réalisation, on dispose l'élément pesant autour de la tige filetée puis on solidarise les première et deuxième extrémités de cette tige à un premier et un deuxième bouchons.

Ensuite, on dispose le moyen d'équilibrage dans la cavité ménagée dans la pale, avant de terminer sa fabrication, afin de noyer totalement le moyen d'équilibrage.

Selon le deuxième mode de réalisation, on dispose l'élément pesant autour de la tige filetée puis on insère l'ensemble tige filetée/élément pesant dans un tube cylindrique. Un premier et un deuxième bouchons, solidarisés par leur portion centrale aux première et deuxième extrémités de la tige filetée viennent alors obturer les zones extrémales du tube cylindrique.

Ce tube cylindrique obturé constituant le moyen d'équilibrage est finalement noyé dans la pale lors de sa fabrication.

Afin d'être déplacé le long de la tige filetée, l'élément pesant comporte un aimant excentré, décalé radialement par rapport à un axe de rotation longitudinal de cet élément pesant. Par exemple, l'aimant est un barreau aimanté inséré dans un orifice excentré de l'élément pesant.

Par conséquent, en appliquant un champ magnétique tournant, à l'aide d'un moyen de commande externe ou inséré dans la pale du dispositif d'équilibrage, on entraîne en rotation l'élément pesant via son aimant excentré. Cette rotation génère alors un déplacement longitudinal de l'élément pesant le long de la tige filetée et donc selon la corde de la pale.

Afin d'optimiser le fonctionnement du dispositif d'équilibrage, l'élément pesant est constitué d'un matériau amagnétique.

En outre, l'élément pesant est avantageusement pourvu d'un moyen de blocage permettant de le maintenir dans une position fixe, en vol.

Le moyen de blocage permet d'éviter que l'élément pesant se déplace d'une manière non souhaitée en vol, sous l'effet des diverses contraintes subies par la pale.

Lorsque la pale est mise en rotation par le moyeu d'un rotor du giravion, le moyen de blocage coopère éventuellement automatiquement avec une paroi périphérique entourant la cavité cylindrique, une paroi de la pale selon le premier mode de réalisation ou encore la périphérie interne tube cylindrique selon le deuxième mode de réalisation, pour maintenir en position l'élément pesant afin que la pale ne soit pas déséquilibrée.

Le moyen de blocage autorisera alors uniquement le déplacement de l'élément pesant le long d'une corde de la pale lorsque cette pale n'est pas mise en rotation par le moyeu d'un rotor du giravion.

Selon une première variante des modes de réalisation, la paroi périphérique de la cavité comportant des cannelures, le moyen de blocage comprend des crans ménagés sur une périphérie externe de l'élément pesant, ces crans étant aptes à coopérer avec les cannelures.

Le nombre de crans est optimisé pour garantir qu'un cran coopère avec une cannelure sans engendrer une rotation importante de l'élément pesant. Par suite, la coopération d'un cran avec une cannelure ne risque pas d'entraîner une translation de l'élément pesant et ne perturbera donc pas l'équilibrage.

Selon une deuxième variante, la paroi périphérique de la cavité comportant des créneaux, le moyen de blocage est muni de saignées réalisées dans une périphérie externe de l'élément pesant afin que des segments de cette périphérie externe puissent s'écarter et se positionner de part et d'autre d'un créneau sous l'effet de la force centrifuge.

La présente invention a aussi pour objet le procédé d'équilibrage de la pale.

Selon l'invention, un procédé pour réaliser un équilibrage dynamique d'une pale de giravion, munie d'un dispositif d'équilibrage dynamique pourvu d'un moyen d'équilibrage noyé à l'intérieur du corps de la pale de manière à ne pas déboucher sur l'extérieur de cette pale, est remarquable en ce que l'on génère un champ magnétique tournant à l'aide d'un moyen de commande pour déplacer selon une corde de la pale un élément pesant du moyen d'équilibrage.

Le champ magnétique entraine en rotation l'élément pesant et permet de déplacer le long d'une corde l'élément pesant pour équilibrer dynamiquement la pale.

Avantageusement, on utilise un moyen de positionnement muni d'un curseur aimanté pour localiser précisément l'emplacement de l'élément pesant à l'intérieur de la pale. L'élément pesant étant muni d'un aimant, cet aimant déplace le curseur aimanté durant son mouvement. La position du curseur aimanté reflète alors correctement la position de l'élément pesant.

L'élément pesant étant noyé dans la pale, il n'est ni visible, ni accessible. Par suite, le moyen de positionnement s'avère très utile.

A titre de variante, le moyen de positionnement comporte un capteur de position pour localiser précisément l'emplacement de l'élément pesant à l'intérieur de la pale.

Avantageusement, le moyen de positionnement est intégré au moyen de commande.

Enfin, deux modes de fonctionnement sont envisageables.

Selon un premier mode de fonctionnement, l'élément pesant n'est déplaçable qu'au sol, un moyen de blocage verrouillant la position de l'élément pesant en vol. Le moyen de commande est alors un moyen de commande externe que l'on dispose sur la pale lorsqu'il est nécessaire de l'équilibrer.

A contrario, selon un deuxième mode de réalisation, le moyen de commande est intégré à la pale. Il devient possible d'équilibrer en temps réel la pale en fonction d'informations fournies par des capteurs de vibrations par exemple, certaines vibrations résultant d'un défaut d'équilibrage.

Ainsi, le giravion étant muni d'un moyen de contrôle qui reçoit des informations relatives à des paramètres de surveillance, le moyen de contrôle active le moyen de commande afin de positionner en temps réel l'élément pesant en fonction desdites informations.

L'invention et ses avantages apparaîtront avec plus de détails dans le cadre de la description qui suit avec un exemple de réalisation donné à titre illustratif en référence aux figures annexées qui représentent:
- la figure 1, une coupe longitudinale d'un moyen d'équilibrage,
- la figure 2, une vue schématique isométrique d'un tronçon de pale muni de deux moyens d'équilibrage,
- la figure 3, une vue isométrique d'un moyen d'équilibrage selon un premier mode de réalisation,
- la figure 4, une vue isométrique d'un moyen d'équilibrage selon un deuxième mode de réalisation,
- les figures 5a et 5b, des vues explicitant le fonctionnement de l'invention,
- la figure 6, une vue présentant une première variante d'un moyen de blocage, et
- les figures 7a et 7b, des vues explicitant une deuxième variante d'un moyen de blocage.

Les éléments présents dans plusieurs figures distinctes sont affectés d'une seule et même référence.

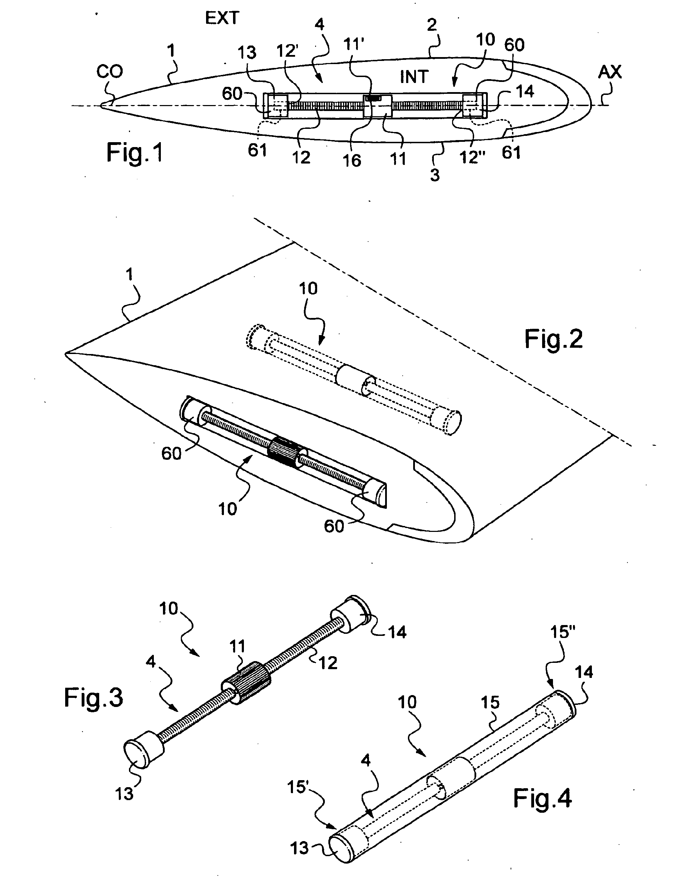

La figure 1 présente une coupe longitudinale d'une pale 1 munie d'un dispositif d'équilibrage.

Ce dispositif d'équilibrage comporte un moyen d'équilibrage 10 noyé à l'intérieur de la pale 1, plus précisément entre l'extrados 2 et l'intrados 3 de cette pale.

Par conséquent, il est impossible d'accéder au moyen d'équilibrage à partir de l'extérieur EXT de la pale 1. Ainsi, le moyen d'équilibrage ne risque pas de subir un phénomène de corrosion, ou encore de perdre des éléments susceptibles de détériorer gravement la pale 1.

Le moyen d'équilibrage 10 comporte une cavité cylindrique 4 de section circulaire orientée selon une corde CO de la pale, cette cavité coupant l'axe neutre en flexion de battement de cette pale 1. Le moyen d'équilibrage étant noyé à l'intérieur INT de la pale 1, on remarque effectivement que la cavité cylindrique 4 ne débouche absolument pas sur l'extérieur EXT, via une trappe d'accès ou autre.

De plus, le moyen d'équilibrage 10 est muni d'un élément pesant 11, une masse d'équilibrage taraudée, engagé sur une tige filetée 12. L'élément pesant comporte donc un filetage qui coopère avec le filetage de la tige filetée 12.

L'élément pesant 11 joue le rôle d'un écrou sur une tige filetée. Cet élément pesant 11 peut ainsi se déplacer longitudinalement selon la corde CO le long de la tige filetée 12 lorsqu'il est mis en rotation autour de son axe de rotation AX, donc autour de la tige filetée 12 qui le traverse en son centre selon cet axe de rotation AX.

Afin de faciliter le déplacement de l'élément pesant, il est possible d'inonder la cavité cylindrique 4 à l'aide d'un fluide possédant des caractéristiques lubrifiantes, ce fluide limitant aussi les effets de la force centrifuge sur l'élément pesant.

De plus, le fluide limite l'usure du moyen d'équilibrage.

Enfin, quel que soit le mode de réalisation, le moyen d'équilibrage 10 est pourvu d'un premier et d'un deuxième bouchons 13, 14 fixés respectivement à une première et une deuxième extrémités 12', 12" de la tige filetée.

Plus précisément, la portion centrale 60 de chaque bouchon est composée d'un matériau retournant à sa forme initiale après la cessation d'une contrainte ayant produit sa déformation, de l'élastomère par exemple. Des trous taraudés 61 sont alors réalisés dans cette portion centrale 60 afin que les bouchons puissent être vissés sur les extrémités de la tige filetée 12.

En outre, afin d'être déplaçable à distance et sans contact, l'élément pesant 11 est pourvu d'un aimant 16 excentré, cet aimant 16 étant décalé radialement par rapport à l'axe de rotation AX de l'élément pesant 11.

Par suite, un barreau aimanté 16 est inséré dans un orifice 11' ménagé dans l'élément pesant 11, le barreau aimanté 16 étant collé dans cet orifice 11'.

Dans ces conditions, l'élément pesant est fabriqué à l'aide d'un matériau amagnétique pour ne pas perturber le fonctionnement du dispositif d'équilibrage.

En référence à la figure 2, il est possible de prévoir une pluralité de moyens d'équilibrage 10 en fonction du besoin, chaque moyen d'équilibrage étant noyé dans la pale 1 et comportant une tige filetée, un élément pesant, et deux bouchons.

En référence à la figure 3, selon un premier mode de réalisation, la cavité cylindrique est obtenue lors de la fabrication de la pale 1.

Le procédé de fabrication de la pale 1 inclut alors des étapes prévoyant d'insérer dans la pale le moyen d'équilibrage 10, et permettant de ne pas remplir la cavité cylindrique requise.

Par exemple, il suffit de découper deux volumes de remplissage de la pale, chaque volume de remplissage présentant une rainure de forme hémi-cylindrique.

On dépose alors le moyen d'équilibrage 10 dans la rainure du premier volume de remplissage, et on le recouvre du deuxième volume de remplissage en prenant soin de disposer les rainures des volumes de remplissage en regard l'une de l'autre.

A contrario, selon un deuxième mode de réalisation représentée sur la figure 4, la cavité cylindrique nécessaire au bon fonctionnement du moyen d'équilibrage 10 se situe à l'intérieur d'un tube cylindrique 15 de section circulaire.

L'homme du métier commence par engager l'élément pesant 11 sur la tige filetée 12 puis dispose l'ensemble obtenu dans le tube cylindrique 15.

Ensuite, il visse les premier et deuxième bouchons sur les première et deuxième extrémités de la tige filetée 12. Finalement, ces premier et deuxième bouchons obturent totalement les zones extrémales 15', 15" du tube 15.

L'homme du métier reproduit cette opération pour tous les moyens d'équilibrage de la pale.

Pour finir, cet homme du métier va noyer chaque tube dans un élément de remplissage fait d'un matériau à matrice thermoplastique ou thermodurcissable, voire métallique, permettant son immobilisation et son intégration à l'intérieur INT même de la pale 1.

Quel que soit le mode de réalisation, le dispositif d'équilibrage comporte un moyen de commande générant un champ magnétique tournant 30.

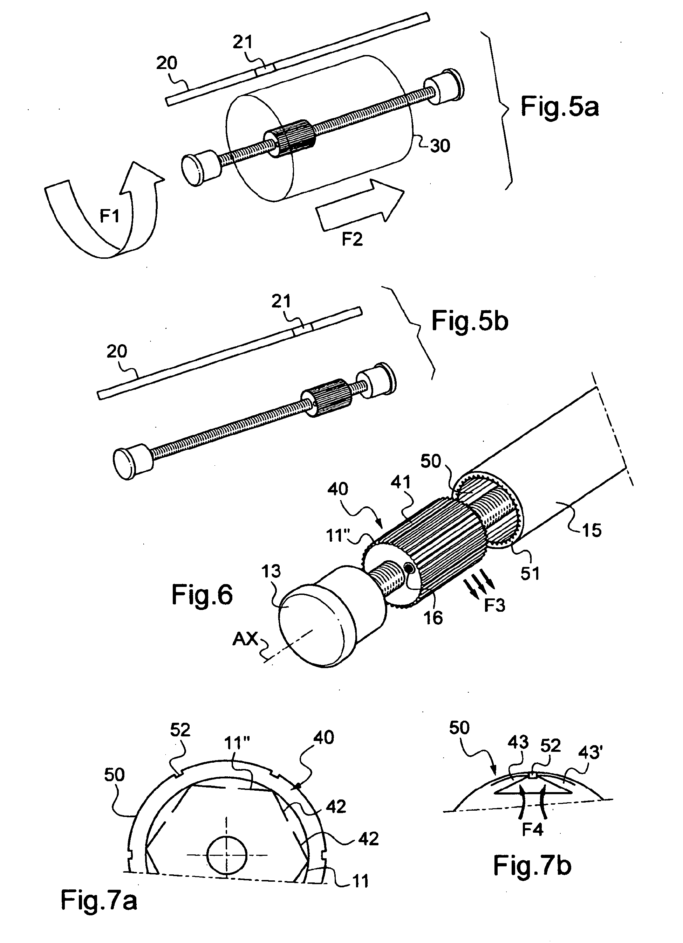

Ce champ magnétique entraîne en rotation l'élément pesant selon la flèche F1 ce qui conduit au déplacement longitudinal de l'élément pesant selon la flèche F2. L'élément pesant est ainsi déplacé d'une première position sur la figure 5a à une deuxième position comme le montre la figure 5b.

L'élément pesant étant noyé dans la pale, l'opérateur ne peut pas visualiser la position du moyen pesant.

Par conséquent, conformément au procédé selon l'invention, l'opérateur dispose sur la pale une règle 20 graduée, munie d'un curseur aimanté 21.

Le curseur étant aimanté, il se place automatiquement au droit de l'aimant de l'élément pesant, c'est-à-dire au dessus de l'aimant, ce qui permet de localiser ce dernier aisément.

A titre de variante, il est envisageable d'implémenter des capteurs de position dans la pale 1.

Par ailleurs, le moyen de commande peut être intégré dans la pale. En permanence, au cours du vol du giravion ou non, le moyen de commande ajuste la position de l'élément pesant du moyen d'équilibrage.

L'ajustement est alors contrôlé par un moyen de contrôle qui reçoit des informations relatives à des paramètres de surveillance, afin d'activer le moyen de commande.

A contrario, il est possible d'utiliser un moyen de commande portatif. Toutefois, dans ce cas de figure, il sera impossible de régler la position de l'élément pesant 11 en vol.

Il est donc préférable de s'assurer que l'élément pesant ne va pas effectuer des mouvements rotatifs sous l'effet des contraintes subies par la pale.

Avantageusement, l'élément pesant est alors pourvu d'un moyen de blocage permettant de verrouiller sa position en vol.

En effet, lorsque la pale est mise en rotation, le moyen de blocage subit des efforts centrifuges importants ce qui lui permet de coopérer avec une paroi périphérique entourant la cavité cylindrique.

Selon une première variante représentée sur la figure 6, la paroi périphérique 50, à savoir la paroi interne du tube cylindrique 15 selon le deuxième mode de réalisation, est pourvue d'une pluralité de cannelures longitudinales 51, parallèles à l'axe de rotation AX de l'élément pesant.

Le moyen de blocage 40 comporte alors des crans longitudinaux 41, parallèles à l'axe de rotation AX de l'élément pesant, agencés sur la périphérie externe de l'élément pesant 11.

Sous l'effet de la force centrifuge, la tige filetée tend à se déplacer selon les flèches F3, ce déplacement étant rendu possible grâce à la nature du matériau de la portion centrale 60 des bouchons 13, 14.

Les crans 41 viennent alors se loger dans les cannelures 51 ce qui interdit tout mouvement rotatif à l'élément pesant 11.

Selon une deuxième variante représentée sur les figures 7a et 7b, la paroi périphérique 50, à savoir la paroi interne du tube cylindrique 15 selon le deuxième mode de réalisation, est pourvue d'un pluralité de créneaux 52 longitudinaux, parallèles à l'axe de rotation AX de l'élément pesant.

Le moyen de blocage 40 comporte alors des saignées 42 ménagées dans la périphérie externe de l'élément pesant 11, chaque saignée 42 étant contenue dans un plan ne coupant pas l'axe de rotation AX de l'élément pesant.

Sous l'effet de la force centrifuge, des segments 43, 43' de l'élément pesant, obtenus en réalisant lesdites saignées 42, s'écartent conformément aux flèches F4 et viennent se positionner de part et d'autre d'un créneau 52 ce qui interdit tout mouvement rotatif à l'élément pesant 11.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) de giravion munie d'un moyen d'équilibrage (10) d'un dispositif d'équilibrage dynamique, dont
ledit moyen d'équilibrage (10) est noyé à l'intérieur (INT) du corps de la pale (1) de manière à ne pas déboucher sur l'extérieur (EXT) de cette pale (1), dont ledit moyen d'équilibrage comporte au moins un élément pesant (11) qui peut être déplacé par un champ magnétique tournant à distance et sans contact le long d'une corde (CO) de la pale (1), et dont ledit élément pesant (11) est pourvu d'un moyen de blocage (40) permettant de le maintenir dans une position fixe.

2. Pale selon la revendication 1,
**caractérisée en ce que**, ledit moyen d'équilibrage (10) comportant au moins un élément pesant (11) disposé dans une cavité cylindrique (4) de section circulaire ne débouchant pas sur l'extérieur (EXT) de la pale (1), ledit élément pesant (11) peut être déplacé à distance et sans contact le long d'une corde (CO) de ladite pale (1) selon laquelle est agencé ladite cavité cylindrique (4).

3. Pale selon la revendication 2,
**caractérisée en ce que** ledit moyen d'équilibrage (10) est pourvu d'une tige filetée (12) qui traverse ledit élément pesant (11) en son centre, ledit élément pesant (11) pouvant tourner autour de ladite tige filetée (12) de manière à se déplacer longitudinalement le long de ladite corde (CO).

4. Pale selon la revendication 3,
**caractérisée en ce que**, ledit moyen d'équilibrage (10) possédant un premier et un deuxième bouchons (13, 14) solidarisés respectivement aux première et deuxième extrémités (12', 12") de ladite tige filetée (12), chaque bouchon (13, 14) comportant dans sa portion centrale (60) un matériau retournant à sa forme initiale après la cessation d'une contrainte ayant produit une déformation dudit matériau, ladite tige filetée (12) est solidarisée au dit matériau constituant le portion centrale (60) de chaque bouchon (13, 14).

5. Pale selon l'une quelconque des revendications 2 à 4,
**caractérisée en ce que** ladite cavité cylindrique (4) est remplie par un fluide.

6. Pale selon l'une quelconque des revendications 2 à 5,
**caractérisée en ce que** ledit élément pesant (11) comporte un aimant (16) excentré, décalé radialement par rapport à un axe de rotation (AX) longitudinal dudit élément pesant (11).

7. Pale selon la revendication 6,
**caractérisée en ce que** ledit aimant (16) est un barreau aimanté inséré dans un orifice (11') excentré dudit élément pesant (11).

8. Pale selon l'une quelconque des revendications 2 à 6,
**caractérisée en ce que** ledit élément pesant (11) est constitué d'un matériau amagnétique.

9. Pale selon l'une quelconque des revendications 2 à 8,
**caractérisée en ce que**, lorsque ladite pale (1) est mise en rotation par le moyeu d'un rotor du giravion, ledit moyen de blocage (40) coopère avec une paroi périphérique (50) entourant la cavité cylindrique (4) pour maintenir en position ledit élément pesant (11).

10. Pale selon la revendication 9,
**caractérisée en ce que** ladite paroi périphérique (50) comportant des cannelures (51), ledit moyen de blocage (40) inclut des crans (41) ménagés sur une périphérie externe (11") de l'élément pesant (11), lesdits crans (41) étant aptes à coopérer avec lesdites cannelures (51).

11. Pale selon la revendication 9,
**caractérisée en ce que** ladite paroi périphérique (50) comportant des créneaux (52), ledit moyen de blocage (40) inclut des saignées (42) réalisées dans une périphérie externe (11") de l'élément pesant (11) afin que des segments (43) de cette périphérie externe (11") puissent s'écarter et se positionner de part et d'autre d'un créneau (42).

12. Procédé pour réaliser un équilibrage dynamique d'une pale (1) de giravion munie d'un dispositif d'équilibrage dynamique pourvu d'un moyen d'équilibrage (10) noyé à l'intérieur (INT) du corps de la pale (1) de manière à ne pas déboucher sur l'extérieur (EXT) de cette pale (1),
au cours duquel on génère un champ magnétique tournant (30) à l'aide d'un moyen de commande pour déplacer selon une corde (CO) de ladite pale (1) un élément pesant (11) dudit moyen d'équilibrage (10).

13. Procédé selon la revendication 12,
**caractérisé en ce que** l'on utilise un moyen de positionnement muni d'un curseur aimanté (21) pour localiser précisément l'emplacement dudit élément pesant (11) à l'intérieur de ladite pale (1).

14. Procédé selon la revendication 12,
**caractérisé en ce que** l'on utilise un moyen de positionnement muni d'un capteur de position pour localiser précisément l'emplacement dudit élément pesant à l'intérieur de ladite pale.

15. Procédé selon l'une quelconque des revendications 12 à 14,
**caractérisé en ce que**, ledit moyen de commande étant intégré à la pale, ledit giravion étant muni d'un moyen de contrôle qui reçoit des informations relatives à des paramètres de surveillance, ledit moyen de contrôle active le moyen de commande afin de positionner en temps réel ledit élément pesant en fonction desdites informations.

## Claims

1. Rotorcraft blade (1) provided with a balancing means (10) of a dynamic balancing device, wherein
said balancing means (10) is embedded in the inside (INT) of the body of the blade (1) in such a manner that it does not emerge to the outside (EXT) of this blade (1), wherein said balancing means comprises at least one heavy element (11) which is remotely movable without contact along a chord (CO) of the blade (1) by a rotary magnetic field, and wherein said heavy element (11) is provided with a locking means (40) enabling it to be held in a fixed position.

2. Blade according to Claim 1,
**characterised in that**, for said balancing means (10) comprising at least one heavy element (11) placed in a cylindrical cavity (4) of circular section that does not emerge to the outside (EXT) of the blade (1), said heavy element (1) is remotely movable without contact along a chord (CO) of said blade (1) along which said cylindrical cavity (4) is arranged.

3. Blade according to Claim 2,
**characterised in that** said balancing means (10) is provided with a threaded rod (12) passing through the centre of said heavy element (11), said heavy element (11) being capable of turning about said threaded rod (12) so as to move longitudinally along said chord (CO).

4. Blade according to Claim 3,
**characterised in that**, for said balancing means (10) possessing first and second plugs (13, 14) secured to respective first and second ends (12', 12") of said threaded rod (12), each plug (13, 14) having in its central portion (60) a material that returns to its initial shape after a stress that has deformed said material ceases to be applied, said threaded rod (12) is secured to said material constituting the central portion (60) of each plug (13, 14).

5. Blade according to any one of Claims 2 to 4, **characterised in that** said cylindrical cavity (4) is filled with a fluid.

6. Blade according to any one of Claims 2 to 5, **characterised in that** said heavy element (11) includes an off-centre magnet (16) that is radially offset from a longitudinal axis of rotation (AX) of said heavy element (11).

7. Blade according to Claim 6,
**characterised in that** said magnet (16) is a magnetised bar inserted in an off-centre orifice (11') of said heavy element (11).

8. Blade according to any one of Claims 2 to 6, **characterised in that** said heavy element (11) is constituted by a non-magnetic material.

9. Blade according to any one of Claims 2 to 8, **characterised in that**, when said blade (1) is set into rotation by the hub of a rotorcraft rotor, said locking means (40) co-operates with a peripheral wall (50) surrounding the cylindrical cavity (4) so as to hold said heavy element (11) in position.

10. Blade according to Claim 9,
**characterised in that** said peripheral wall (50) includes fluting (51) and said locking means (40) includes notches (41) formed on an outer periphery (11") of the heavy element (11), said notches (41) being adapted to cooperate with said fluting (51).

11. Blade according to Claim 9,
**characterised in that** said peripheral wall (50) includes splines (52) and said locking means (40) includes slots (42) formed in an outer periphery (11") of the heavy element (11) so that segments (43) of this outer periphery (11') can move apart and take up positions on either side of a spline (42).

12. Method for achieving dynamic balancing of a rotorcraft blade (1) provided with a dynamic balancing device having a balancing means (10) embedded in the inside (INT) of the body of the blade (1) in such a manner that it does not emerge to the outside (EXT) of this blade (1),
in which method a rotary magnetic field (30) is generated with the help of a control means for moving a heavy
element (11) of said balancing means (10) along a chord (CO) of said blade (1).

13. Method according to Claim 12,
**characterised in that** a positioning means provided with a magnetised slider (21) is used to locate accurately the position of said heavy element (11) inside said blade (1).

14. Method according to Claim 12,
**characterised in that** use is made of a positioning means provided with a position sensor for accurately locating the position of said heavy element inside said blade.

15. Method according to any one of Claims 12 to 14, **characterised in that**, for said control means being incorporated in the blade, and for said rotorcraft being provided with a monitoring means that receives information relating to monitoring parameters, said monitoring means activates the control means to position said heavy element in real time as a function of said information.

## Patentansprüche

1. Schaufelblatt (1) eines Drehflügelflugzeugs mit einem Ausgleichsmittel (10) einer dynamischen Ausgleichsvorrichtung, wobei das Ausgleichsmittel (10) in das Innere (INT) des Körpers des Schaufelblattes (1) so versenkt ist, dass es nicht an das Äuβere (EXT) dieses Schaufelblattes (1) vortritt, dessen Ausgleichsmittel mindestens ein schweres Element (11) aufweist, welches durch ein sich drehendes Magnetfeld aus der Entfernung und ohne Kontakt entlang einer Schnur (CO) des Schaufelblattes (1) bewegt werden kann und dessen schweres Element (11) mit einem Blockiermittel (40) versehen ist, welches es ermöglicht, das schwere Element in einer festgelegten Stellung zu halten.

2. Schaufelblatt nach Anspruch 1, **dadurch gekennzeichnet, dass** das Ausgleichsmittel (10) mindestens ein schweres Element (11) aufweist, welches in einer zylindrischen Öffnung (4) mit kreisrundem Querschnitt angeordnet ist, nicht zum Äußeren (EXT) des Schaufelblatts (1) vorsteht, wobei das schwere Element (11) aus der Entfernung und ohne Kontakt entlang einer Schnur (CO) des Schaufelblattes (1) bewegt werden kann, entlang der die zylinderförmige Öffnung (4) angelegt ist.

3. Schaufelblatt nach Anspruch 2, **dadurch gekennzeichnet, dass** das Ausgleichsmittel (10) mit einem Gewindestab (12) versehen ist, der das schwere Element (11) in dessen Mitte durchquert, wobei das schwere Element (11) sich um die Gewindestange (12) drehen kann, dass es sich längs der Schnur (CO) bewegt.

4. Schaufelblatt nach Anspruch 3, **dadurch gekennzeichnet, dass** das Ausgleichsmittel (10) eine erste und eine zweite Kappe (13, 14) aufweist, die jeweils am ersten und am zweiten Ende (12', 12") der Gewindestange (12) befestigt sind, wobei jede Kappe (13, 14) in ihrem Mittenbereich (60) ein Material aufweist, welches nach dem Lösen einer Spannung, die zu einer Deformation des Materials geführt hat, in seine ursprüngliche Form zurückkehrt, wobei die Gewindestange (12) an dem Material befestigt ist, welches den mittleren Bereich (60) einer jeden Kappe (13, 14) bildet.

5. Schaufelblatt nach einem der Ansprüche 2 bis 4, **dadurch gekennzeichnet, dass** die zylinderförmige Öffnung (4) mit einem Fluid gefüllt ist.

6. Schaufelblatt nach einem der Ansprüche 2 bis 5, **dadurch gekennzeichnet, dass** das schwere Element (11) einen Magneten (16) aufweist, der exzentrisch und radial gegenüber einer Längsdrehachse (AX) des schweren Elements (11) versetzt angeordnet ist.

7. Schaufelblatt nach Anspruch 6, **dadurch gekennzeichnet, dass** der Magnet (16) ein magnetisierter Stab ist, der in eine exzentrische Öffnung (11') des schweren Elements (11) eingelassen ist.

8. Schaufelblatt nach einem der Ansprüche 2 bis 6, **dadurch gekennzeichnet, dass** das schwere Element (11) aus einem nichtmagnetischen Material besteht.

9. Schaufelblatt nach einem der Ansprüche 2 bis 8, **dadurch gekennzeichnet, dass**, wenn das Schaufelblatt (1) durch einen Rotor des Drehflügelflugzeugs in eine Drehbewegung versetzt ist, die Blockiermittel (40) mit einer Umfangswand (50) zusammenwirken, die die zylinderförmige Öffnung (4) umgibt, um das schwere Element (11) in Stellung zu halten.

10. Schaufelblatt nach Anspruch 9, **dadurch gekennzeichnet, dass** die Umfangswand (50) Nuten (51) aufweist, und das Blockiermittel (40) Rippen (41) aufweist, die auf dem äußeren Umfang (11") des schweren Elements (11) ausgebildet sind, wobei die Rippen (11) mit den Nuten (51) zusammenwirken können.

11. Schaufelblatt nach Anspruch 9, **dadurch gekennzeichnet, dass** die Umfangswand (50) Rillen (52) aufweist, und das Blockiermittel (40) Ausnehmungen (42) aufweist, die am äußeren Umfang (11") des schweren Elements (11) ausgebildet sind, damit sich die Segmente (43) dieses äußeren Umfangs (11") von einer Rille (52) entfernt positionieren können.

12. Verfahren zur Erzielung eines dynamischen Ausgleichs eines Schaufelblatts (1) eines Drehflügelflugzeugs, welches mit einer Vorrichtung zum dynamischen Ausgleichen versehen ist, die ein Ausgleichsmittel (10) aufweist, welches im Inneren (INT) des Körpers des Schaufelblatts (1) derart versenkt ist, dass es nicht zum Äußeren (EXT) dieses Schaufelblatts (1) vorsteht, wobei während des Verfahrens ein sich drehendes Magnetfeld (30) mit einem Steuermittel erzeugt wird, um ein schweres Element (11) des Ausgleichsmittels (10) entlang einer Schnur (CO) des Schaufelblattes zu bewegen.

13. Verfahren nach Anspruch 12, **dadurch gekennzeichnet, dass** Positioniermittel verwendet werden, die mit einem magnetisierten Zeiger (21) versehen sind, um die Lage des schweren Elements (11) im Inneren des Schaufelblatts (1) genau zu lokalisieren.

14. Verfahren nach Anspruch 12, **dadurch gekennzeichnet, dass** ein Positionierungsmittel verwendet wird, welches mit einem Stellungsaufnehmer versehen ist, um genau die Lage des schweren Elements im Inneren des Schaufelblattes zu lokalisieren.

15. Verfahren nach einem der Ansprüche 12 bis 14, **dadurch gekennzeichnet, dass** die Steuermittel in das Schaufelblatt integriert sind und das Drehflügelflugzeug mit einer Steuerung versehen ist, die Informationen bezüglich der Überwachungsparameter empfängt, wobei die Steuermittel die Steuerung aktivieren, um unmittelbar in "real time" die schweren Elemente in Abhängigkeit von diesen Informationen zu positionieren.
